# EUROPÄISCHE PATENTSCHRIFT

(11) **EP 0 714 686 B1**
(45) Veröffentlichungstag und Bekanntmachung des Hinweises auf die Patenterteilung: **29.07.1998**
(21) Anmeldenummer: 95118340.9
(22) Anmeldetag: 22.11.1995
(51) Int. Cl.: B01D 21/24, B01D 21/02

(54) **Absetzbecken für Kläranlagen**
Settling tank for purification plants
Bassin de décantation pour stations d'épuration

(30) Priorität: 23.11.1994 DE 9418781 U
(43) Veröffentlichungstag der Anmeldung: 05.06.1996
(73) Patentinhaber: PASSAVANT-WERKE AG, 65322 Aarbergen 7 (DE)
(72) Erfinder: Meckmann, Peter, D-65624 Altendiez (DE)

(56) Entgegenhaltungen:
- EP-A- 0 063 697
- DE-A- 3 627 119
- DE-A- 4 023 557
- DE-B- 1 759 851
- DE-C- 586 573
- DE-U- 9 406 958

## Beschreibung

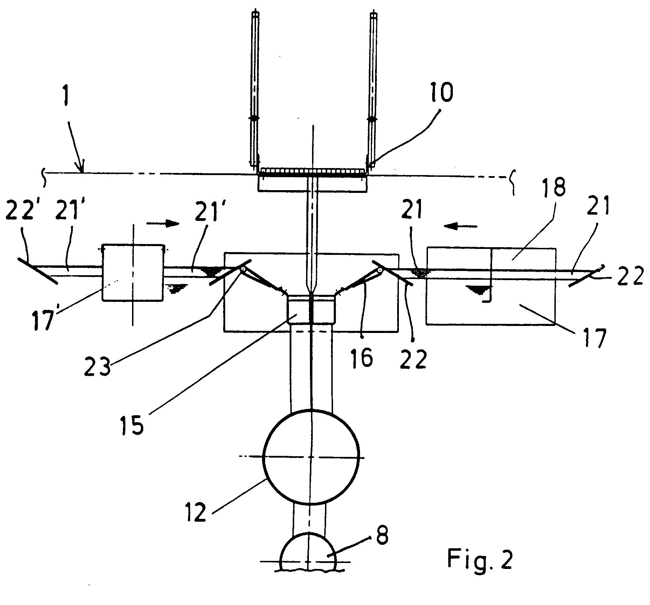

Die Erfindung bezieht sich auf ein kreisrundes oder kreisringförmiges Absetzbecken für Kläranlagen mit einer Einrichtung zum Räumen des Schwimmschlammes.
Bekannte Schwimmschlamm-Räumeinrichtungen bedienen sich einer radial erstreckten Abzugsrinne und eines Räumschildes, das auf die Rinne zubewegt wird und den Schwimmschlamm über die bei größter Annäherung abgesenkte Einlaufkante in die Rinne schiebt. Das Räumschild wird anschließend angehoben, so daß die Räumerbrücke über die Rinne weiterfahren kann (DE-C-40 23557).
Diese Art der Schwimmschlammräumung ist nur durchführbar, wenn das Klärbecken keinen an die Brücke angehängten Bodenräumer aufweist.
Es hat sich gezeigt, daß diese Form der Schwimmschlammräumung noch nicht optimal ist. Insbesondere kann es vorkommen, daß das Räumschild den erfaßten Schwimmschlamm statt in die Rinne unter der Rinne hindurchschiebt und sich der Schlamm dadurch der Räumung entzieht. Außerdem erzeugt das stetig umlaufende Räumschild an der Beckenoberfläche eine Umlaufströmung, die das Unterschieben begünstigt.
Die Aufgabe, diese ungenügende Funktion des bekannten Raumsystems zu verbessern, wird nunmehr erfindungsgemäß dadurch gelöst, daß die Rinne auf beiden Seiten absenkbare Einlaufkanten aufweist und daß das Raumschild für eine über den ganzen Beckenumfang hin- und hergehende Umlaufbewegung angetrieben ist, die jeweils an der Rinne endet und dort auf Gegenrichtung umgesteuert wird. Durch die Umlaufrichtungsumkehr des Raumschildes kann es jetzt nicht mehr zu einer Wasserumlaufbewegung kommen; der Schwimmschlamm wird vielmehr von dem Raumschild einwandfrei erfaßt und in die Rinne befördert.
Es ist zwar aus DE-C-586 573 eine Räumeinrichtung bekannt, die eine hin- und herfahrbare Brücke aufweist. An dieser Brücke ist eine Rinne aufgehängt, die um eine Horizontalachse schwenkbar ist. Die jeweils in Fahrtrichtung vorne liegende Kante der Rinne ist abgesenkt und soll den Schwimmschlamm schon während der Fahrt aufnehmen. An der ortsfesten Umkehrstelle ist ein Stauschild vorgesehen, das auch die Rinne durch Anschlagen in die andere Stellung kippt. Diese Raumeinrichtung ist aber sehr aufwendig und darüber hinaus wenig wirksam. Damit Schwimmschlamm überhaupt in die Rinne laufen kann, muß die vordere Einlaufkante tief unter Wasser abgesenkt werden. Dann ist aber damit zu rechnen, daß sehr viel Wasser mit dem Schlamm abgezogen wird, das den Schlamm unnötig verdünnt. Bei der vorliegenden Erfindung wird diese Fehlfunktion vermieden.
Außerdem ist eine ortsfeste Anordnung der Rinne für den Schlammabzug wesentlich weniger aufwendig.
Die Erfindung läßt sich auf bevorzugte Weise dadurch realisieren, daß das Räumschild als schwimmender Hohlbalken oder als mit Schwimmern versehenes Schild ausgebildet ist. Auf diese Weise kann eine Trag- und Fahreinrichtung entfallen; es ist nur noch innen ein Drehantrieb und eine Drehführung und -lagerung erforderlich. Beide haben vorzugsweise die Form eines über einen Zahnkranz angetriebenen Drehkranzes.
Die Einlaufkanten der Rinne besitzen vorzugsweise ebenfalls Schwimmer, die sie geschlossen halten. Das reversierend umlaufende Räumschild besitzt beiderseits vorstehende Arme mit schräg ansteigenden Leitkufen, mit denen die Einlaufkanten bei Annäherung des Räumschildes heruntergedrückt und dadurch für den Schwimmschlammablauf geöffnet werden.
Eine durchaus erwünschte Leichtbauweise ergibt sich aus einer weiteren bevorzugten Ausgestaltung, die dadurch gekennzeichnet ist, daß die Rinne auf einer radial durch das Becken verlegten Zulaufleitung für das Rohwasser abgefangen wird. Wenn eine Brücke gefordert ist, die die Wartung der auf dem Mittelbauwerk montierten Antriebe ermöglicht, dann kann diese Brücke als einfacher Laufsteg ausgebildet sein, der sich auf der Rinne und/oder dem Zulaufrohr abstützt. Es ist des weiteren erfindungsgemäß vorgesehen, auch die Abzugsleitung für den im Schlammtrichter gesammelten Bodenschlamm radial durch das Becken und unter der Zulaufleitung zu verlegen, so daß sie im Verbund mit der Zulaufleitung als Abstützung für die Rinne und/oder den Laufsteg dienen kann.
Weitere Ausgestaltungs- und Variationsmerkmale sind Gegenstand von weiteren Unteransprüchen. Die anliegenden Abbildungen eines bevorzugten Ausführungsbeispiels zeigen einige dieser Merkmale.

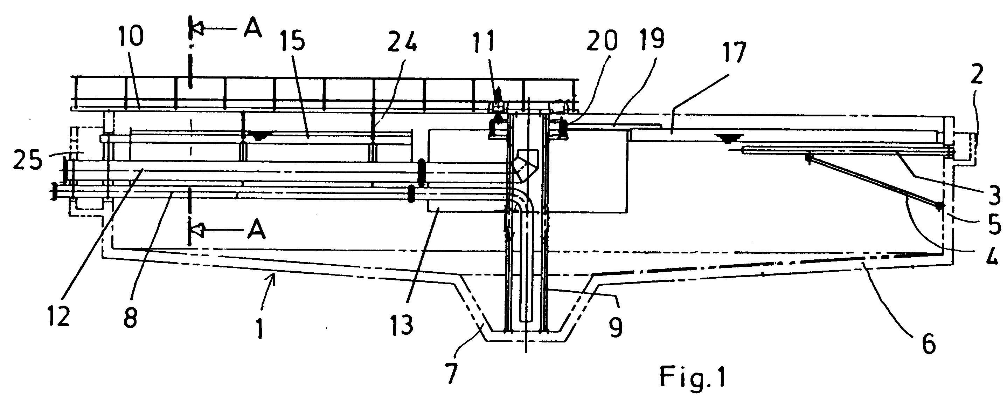

- Fig.1: zeigt das Rundbecken mit der neuen Räumeinrichtun im vertikalen Achsschnitt;
- Fig.2: ist ein Vertikalschnitt A-A durch den Zulaufbereich im vergrößerten Maßstab.
Bei dem kreisrunden Klärbecken 1 handelt es sich um ein Nachklärbecken, in dem auch Schwimmschlamm auftreten kann. Das für ein solches Becken notwendige Bodenräumwerk ist weggelassen, weil es nicht Gegenstand dieses Schutzrechts ist.
Das Becken ist von einer Ringrinne 2 umgeben, in die das von eingetauchten Abzugsrohren 3 aufgenommene Klarwasser abfließt.
Die etwa bis zum halben Beckenradius nach innen reichenden Abzugsrohre sind durch Schrägstützen 4 an der Beckenwand 5 abgefangen, so daß ohne weiteres ein am Beckenboden arbeitendes Bodenschlamm-Räumwerk eingesetzt werden kann, das über eine am Mittelbauwerk gelagerte Vertikalwelle angetrieben wird.
In dem zentralen Schlammtrichter 7, aus dem der Schlamm via Abzugsrohr 8 abgesaugt wird, ruht das hier aus vier Stützen bestehende Mittelbauwerk 9. Vom Mittelbauwerk zum Beckenrand spannt sich ein Laufsteg 10, auf dem man zu den Antrieben 11 für die beiden Räumwerke gelangt (Der Antrieb für das Bodenräumwerk ist nicht dargestellt). In dem Mittelbauwerk mündet auch die Zulaufleitung 12 für das Rohwasser. Die (nach obenausgerichtete) Mündung ist umgeben von einem Leitzylinder 13, der das zulaufende Rohwasser am direkten kurzen Fluß zu den Klarwasserrohren hindert.
Der Laufsteg 11 stützt sich mittels Streben 24 auf der Schwimmschlamm-Abzugsrinne 15 ab, wie Fig.2 in deutlicher Darstellung zeigt. Die Rinne hat kastenförmiges Profil und auf beiden Längsseiten klappbare Einlaufkanten 16. In jede Kante ist ein Hohlprofil 23 eingearbeitet, das als Schwimmer wirkt und die Einlaufkante über Wasser und die Rinne somit geschlossen halt.

Als Räumschild dient nach dem rechten Teil der Fig.2 ein Flachprofil 17, das durch Schwimmkörper 18 in der Räumstellung gehalten wird. Das Räumschild 17 ist über einen Kragarm 19 mit einem Drehkranz 20 verbunden, der am Mittelbauwerk gelagert ist und von oben angetrieben wird.

Fig.2 zeigt, wie der bei einem vollständigen Umlauf des Räumschilds 17 zusammengeschobene Schwimmschlamm in die Abzugsrinne gelangt. Auf beiden Seiten des Raumschilds ragen Arme 21,21' vor, die an ihrem Ende schräg ansteigende Leitkufen 22 tragen. Die Leitkufen laufen auf die Oberkante der Einlaufkante 16 auf und drücken diese so weit nieder, daß der Schwimmschlamm mit ausreichendem Förderdruck in die Rinne lauft. Es ist durchaus denkbar, die Einlaufkante in mehrere Abschnitte zu unterteilen und jedem Abschnitt eine gestaffelt angeordnete Leitkufe zuzuordnen. Der Schwimmschlamm wird dann abschnittsweise eingeschoben, so daß sich in der Rinne schon eine Förderströmung zur Abzusstelle einstellt.
Der linke Teil der Fig.2 zeigt ein Räumschild 17', das keine Schwimmer enthält, dafür aber selber als schwimmfähiges Hohlkastenprofil ausgebildet ist. Die beiden Vertikalwände des Kastenprofils wirken als Räumschilde. Die Abzugsrinne 15 mündet außen in einen Auffangschacht 25, aus dem der Schwimmschlamm abläuft oder abgezogen wird.
Endanschläge für das Anhalten des Räumschilds und eine entsprechende Umsteuerung auf Gegenrichtung sind handelsüblich und brauchen hier nicht im einzelnen beschrieben zu werden.

Die hiervor beschriebene Einrichtung zum Räumen und Abziehen von Schwimmschlamm ist auch hervorragend zum Nachrüsten von Absetzbecken geeignet.

## Patentansprüche

1. Kreisrundes oder kreisringförmiges Absetzbecken für Kläranlagen mit einer an der Wasserfläche ortsfest angeordneten, radial erstreckten Rinne (15) zum Ableiten des Schwimmschlamms und einem auf die Rinne bis zum völligen Abschluß zubewegbaren Räumschild (17, 17'), **dadurch gekennzeichnet,** daß die Rinne (15) auf beiden Seiten absenkbare Einlaufkanten (16) für den Überlauf von Schwimmschlamm aufweist und daß das Räumschild (17, 17') für eine über den ganzen Beckenumfang hin- und hergehende Umlaufbewegung angetrieben ist, die jeweils an der Rinne (15) mit dem Einschieben des geräumten Schwimmschlamms endet und dort auf Gegenlauf umgesteuert wird.

2. Absetzbecken nach Anspruch 1, **dadurch gekennzeichnet,** daß das Räumschild (17') als schwimmender Hohlbalken ausgebildet ist.

3. Absetzbecken nach Anspruch 1, **dadurch gekennzeichnet,** daß das Räumschild (17, 17') innen an dem Mittelbauwerk (9) angetrieben (Antrieb 20) und außen von einem Schwimmer (18) getragen ist.

4. Absetzbecken nach Anspruch 1, 2 oder 3, **dadurch gekennzeichnet,** daß die Rinne (15) auf beiden Seiten von Schwimmern (23) geschlossen gehaltene, schwenkbare Überfallkanten (16) hat und daß das Räumschild (17, 17') auf beiden Seiten Leitkufen (22, 22') hat, mit denen es bei vollständiger Annäherung die jeweilige Überfallkante (16) niederdrückt.

5. Absetzbecken nach Anspruch 1 bis 4, **dadurch gekennzeichnet,** daß das Zulaufrohr (12) für das Schmutzwasser radial durch das Becken bis zum Mittelbauwerk (9) verlegt ist und die Rinne (15) von unten abstützt.

6. Absetzbecken nach einem oder mehreren der Ansprüche 1 bis 5, **dadurch gekennzeichnet,** daß ein durch den Beckenradius bis zum Mittelbauwerk (9) verlaufender Laufsteg (10) vorgesehen ist, der sich auf der Rinne (15) und/oder dem Zulaufrohr (12) abstützt.

7. Absetzbecken nach Anspruch 6, **dadurch gekennzeichnet,** daß das Absaugrohr (8) für den Bodenschlamm radial durch das Becken (1) und unter dem Zulaufrohr (12)verlegt ist.

8. Absetzbecken nach einem oder mehreren der vorstehenden Ansprüche, mit eingetauchten Abzugsrohren für das Klarwasser**, dadurch gekennzeichnet,** daß die Abzugsrohre (3) für Klarwasser als vom Beckenrand (5) radial nach innen erstreckte Rohrstücke ausgebildet sind, die durch an der Beckenwand (5) befestigte Schrägstützen (4) gehalten und in einer Höhe unterhalb des verfahrbaren Raumschilds (17,17') angeordnet sind.

## Claims

1. Circular settling tank for waste water treatment plants including a stationary, radially positioned trough for the scum discharge and a scum blade moving towards the trough until making contact, **characterized in that** the trough (15) is provided at both ends with height-adjustable overflow edges (16) for the scum and that the motorized scum blade (17, 17') is travelling back and forth across the entire tank circumference, and each time when reaching the trough (15), the collected scum is discharged and the travel direction of the scum blade is reversed.

2. Settling tank according to claim 1, **characterized in that** the scum blade (17') is built as floating hollow bar.

3. Settling tank according to claim 1, **characterized in that** the scum blade (17, 17') is driven by the drive unit (20) mounted onto the center column (9) and is supported at the other end by a float (18).

4. Settling tank according to one of the claims 1, 2 or 3, **characterized in that** the trough (15) is provided at both sides with pivoting overflow edges (16) which are kept closed by floats (23) and that the scum blade (17, 17') is equipped on both sides with guide skids (22, 22') which press the respective overflow edge (16) down when contact is made.

5. Settling tank according to the claims 1 through 4, **characterized in that** the intake pipe (12) for the waste water runs radially through the tank to the center column (9) and supports the trough (15) from underneath.

6. Settling tank according to one or several claims 1 through 5, **characterized in that** it is provided with a walkway (10) crossing the tank radius to the center column (9) which is supported by the trough (15) and/or intake pipe (12).

7. Settling tank according to claim 6, **characterized in that** the suction pipe (8) for the sludge at the tank bottom runs radially through the tank (1) below the intake pipe (12).

8. Settling tank according to one or several of the claims mentioned before including submerged discharge pipes for the clarified water, **characterized in that** the discharge pipes (3) are formed as pipe sections radially protruding from the tank wall (5) into the tank inside, which are attached by inclined supports (4) to the tank wall (5) and are arranged at the same height underneath the moveable scum blade (17, 17').

## Revendications

1. Bassin de décantation circulaire pour les stations d'épuration des eaux résiduaires étant équipées d'une goulotte de receuil des flottants stationnaire, s'étendant radialement à travers la surface d'eau, destinée à la décharge des écumes, et équipées d'un racleur des flottants se déplaçant vers la goulotte et s'arrêtant à son contact, **caractérisé en ce que** la goulotte (15) est munie des deux côtés d'un bord-déversoir ajustable en hauteur (16) pour recevoir les écumes et que le racleur des flottants (17, 17') motorisé va et vient à travers l'entière circonférence du bassin, chaque trajet se terminant lorsqu'il arrive à la goulotte (15) où les écumes rassemblées sont déchargées dans la goulotte et le sens de marche du racleur est renversé.

2. Bassin de décantation selon revendication 1, **caractérisé en ce que** le racleur des flottants (17') est construit comme poutre creuse flottante.

3. Bassin de décantation selon revendication 1, **caractérisé en ce que** l'unité d'entraînement (20) du racleur des flottants (17, 17') est située sur la colonne centrale du bassin (9) et qu'il est supporté à l'autre extrémité par un flotteur (18).

4. Bassin de décantation selon une des revendications 1, 2 ou 3, **caractérisé en ce que** la goulotte (15) est pourvue des deux côtés d'un borddéversoir pivotant (16), chacun étant tenu fermé par un flotteur (23) et que le racleur des flottants (17, 17') est équipé des deux côtés d'un patin de guidage (22, 22') lequel affaisse le bord-déversoir correspondant (16) à son contact avec la goulotte.

5. Bassin de décantation selon les revendications 1 à 4, **caractérisé en ce que** le tuyau d'entrée (12) pour les eaux résiduaires est posé radialement à travers du bassin jusqu'à la colonne centrale (9) et qu'il supporte la goulotte de receuil des flottants (15) d'en bas.

6. Bassin de décantation selon une ou plusieurs revendications 1 à 5, **caractérisé en ce que** l'on a prévu une passerelle (10) s'étendant du mur du bassin jusqu'à la colonne centrale (9) laquelle s'appuie sur la goulotte de receuil des flottants (15) et/ou sur le tuyau d'entrée (12).

7. Bassin de décantation selon revendication 6, **caractérisé en ce que** le tuyau d'aspiration (8) pour les boues au fond du bassin est posé radialement à travers du bassin (1) en dessous du tuyau d'entrée (12).

8. Bassin de décantation selon une ou plusieurs revendications mentionnées ci-avant comprenant des tuyaux d'aspiration immergés pour l'eau clarifiée, **caractérisé en ce que** les tuyaux d'aspiration (3) sont formés comme tubulures s'étendant radialement du mur du bassin (5) à l'intérieur du bassin et qu'elles sont montées à l'aide des poteaux inclinés (4) au mur du bassin (5) et situées à la même hauteur en dessous du racleur des flottants movible (17, 17').
